(19) Europäisches Patentamt
European Patent Office
Office européen des brevets

(11) EP 1 348 478 B2

(12) NEUE EUROPÄISCHE PATENTSCHRIFT
Nach dem Einspruchsverfahren

(45) Veröffentlichungstag und Bekanntmachung des Hinweises auf die Entscheidung über den Einspruch:
**28.12.2011 Patentblatt 2011/52**

(45) Hinweis auf die Patenterteilung:
**06.05.2009 Patentblatt 2009/19**

(21) Anmeldenummer: **03003310.4**

(22) Anmeldetag: **13.02.2003**

(51) Int Cl.:
***B01D 69/12*** *(2006.01)* ***B01D 69/14*** *(2006.01)*
***H01M 8/10*** *(2006.01)* ***B01D 71/70*** *(2006.01)*
***B01D 71/52*** *(2006.01)*

(54) **Verfahren zur Herstellung von Kompositmembranen**

Method for producing composite membranes

Procédé de fabrication de membranes composites

(84) Benannte Vertragsstaaten:
**DE FR GB**

(30) Priorität: **21.02.2002 DE 10207411**

(43) Veröffentlichungstag der Anmeldung:
**01.10.2003 Patentblatt 2003/40**

(73) Patentinhaber: **3M Innovative Properties Company**
**St. Paul, MN 55133-3427 (US)**

(72) Erfinder:
- **Goedel, Werner A., Dr.**
  **89081 Ulm (DE)**
- **Jaumann, Manfred, Dipl.-Ing.**
  **89077 Ulm (DE)**
- **Möller, Martin, Prof. Dr.**
  **52070 Aachen (DE)**
- **Muzzafarow, Assiz, Prof.**
  **Profsoyunaya Ul70**
  **117393 Moskow (RU)**

(74) Vertreter: **Kurz, Arnd**
**3M ESPE AG**
**3M Office of Intellectual Property Counsel**
**ESPE Platz**
**82229 Seefeld (DE)**

(56) Entgegenhaltungen:
**EP-A- 1 191 621 WO-A1-99/15262**
**WO-A1-99/62620**

- **BONNET B ET AL: "HYBRID ORGANIC-INORGANIC MEMBRANES FOR A MEDIUM TEMPERATURE FUEL CELL" JOURNAL OF NEW MATERIALS FOR ELECTROCHEMICAL SYSTEMS, SN, MONTREAL, CA, Bd. 3, Nr. 2, 2000, Seiten 87-92, XP000997606 ISSN: 1480-2422**
- **J.FALBE, M.REGITZ: 'RÖMPP Lexikon der Chemie', 1997, GEORG THIEME VERLAG Artikel 'Dispersion', Seite 1014**
- **'DIN EN ISO 862' 1995,**

EP 1 348 478 B2

## Beschreibung

Die Erfindung betrifft ein Verfahren zur Herstellung von Kompositmembranen, wie im Anspruch beschrieben.

Membranen für PEM-Brennstoffzellen müssen eine ausreichende chemische und mechanische Stabilität aufweisen, eine hohe Protonenleitfähigkeit und sie müssen preiswert herstellbar sein.

Die bislang verwendeten perflorierten Kationenaustauschermembranen zeigen hier starke Defizite. Neben dem komplexen Herstellungsverfahren und dem Recyclingproblem ist dieser Werkstoff sehr teuer und besitzt eine hohe Methanolpermeabilität, was die Anwendung dieser Membranen z.B. in Direktmethanolbrennstoffzellen (DMFC) stark limitiert.

Weitere Membranmaterialien sind modifizierte, hochtemperaturbeständige Polymere, wie Polybenzimidazol (PBI) und Polyethersulfon (PES). Üblicherweise wird hierzu das PBI mit Phosphorsäure behandelt. Die Phosphorsäuremoleküle werden zum einen durch Wasserstoffbrückenbindungen an das Polymer angeheftet und zum anderen zur Protonierung der Imidazol-Gruppierung in der Membran angebunden. Problematisch ist jedoch, daß die Phosphorsäure allmählich mit dem Wasser, das während des Betriebs der Brennstoffzelle entsteht, aus der PBI-Matrix ausgeschieden wird. Des weiteren weist die PBI-Phosphorsäuremembran ein sehr niedriges E-Modul auf, weshalb eine unbefriedigende Stabilität der Membran in Brennstoffzellen zu erwarten ist.

Aus der EP 0 574 791 A1 sind preiswerte alternative Materialien auf Basis sulfonierter Arylpolymere, beispielsweise sulfoniertes PEEK, PEK und PES bekannt. Jedoch zeigen die Kationenaustauschermembranen aus derartigen sulfonierten Arylpolymeren ein starkes Quellungsverhalten bei erhöhter Temperatur. Dadurch ist die Eignung solcher Membranen für den Einsatz in einem Brennstoffzellensystem stark eingeschränkt.

Die DE 44 22 158 A1 beschreibt Kompositmembranen aus sulfoniertem Polyetherketon (PEK) und unmodifiziertem Polyethersulfon (PES). Die beiden Komponenten sind vollständig ineinander mischbar, was auf ihre sehr ähnlichen chemischen Strukturen und die Polarität von PES (Ion-Dipol-Wechselwirkungen) zurückzuführen ist. Diese durch Strukturähnlichkeit entstandene Wechselwirkung erscheint jedoch noch unzureichend, so daß die Gefahr besteht, daß diese Membranen bei einer Ionenaustauscherkapazität, wie sie beim Betrieb von Brennstoffzellen erforderlich ist, bei erhöhter Temperatur stark quellen. Es werden drei oder vier Komponenten-Mischungen aus sulfoniertem PEK, PES, Polyvinylpyrrolidon (PVP) und Polyglykoldimethylether (PG) beschrieben, die eine bessere Wasseraufnahme besitzen. Quantitative Angabe zur Wasseraufnahme werden jedoch nicht gemacht.

Aus der DE 198 17 374 A1 sind Mischungen aus sulfoniertem Arylpolymer (PEEK und PSU) und Polybenzimidazol (PBI) bekannt, die eine kovalente Vernetzung durch die Protonenübertragung von sulfonierten Arylpolymer auf PBI (z.B. PEEK-$SO_2$-O-H-N-PBI) besitzen. Diese Vernetzung findet bereits bei Raumtemperatur im Lösungsmittel, beispielsweise N-Methylpyrrolidon (NMP) statt, wodurch sich ein unlöslicher Polyelektrolytkomplex bildet. Zur Herstellung von Kompositmembranen muß das sulfonierte Arylpolymer in eine lösliche Salzform umgewandelt werden. Dieser zusätzliche Schritt gestaltet die Herstellung der Membran aufwendig.

Die Wechselwirkung zwischen PBI und Arylpolymer ist so stark, daß hohe Inhomogenitäten in der Membran zwischen der Vernetzungsregion, der von Wasser gequollenen Gelphase und der Polymermatrix verursacht werden können. Folglich können Innenspannungen in der Membran entstehen, welche zu einer Verschlechterung der mechanischen Stabilität der Membran führen können.

Aus dem Stand der Technik sind außerdem Kompositmembranen aus sulfoniertem Arylpolymer (PEEK oder PSU) mit aminiertem Polysulfon (PSU) bekannt. Da aminierte Polysulfone schwache Polybasen sind können Polysäure-Base-Mischungen in der Lösung hergestellt werden. Zwischen den Kompositkomponenten wirken sowohl ionische Wechselwirkungen als auch Wasserstoffbrückenbindungen, d.h. Ringstrukturen, welche eine physikalische Vernetzung aufweisen. Diese Kompositmembranen wurden in PEM-Brennstoffzellen und Direktmethanolbrennstoffzellen getestet. Dabei ergaben sich Stromdichten von 1,0 bis 1,2 A/$cm^2$ bei einer Spannung von 0,7 V in $H_2$/$O_2$-PEM-Brennstoffzellen und von 0,4 bis 0,6 A/$cm^2$ in Luft/$H_2$-PEM-Brennstoffzellen. In Direktmethanolbrennstoffzellen zeigte diese Membran eine mit z.B. Nafion-117 vergleichbare i-U-Kennlinie.

Bonnet et al., offenbaren in J. New Mat. Electrochem. Systems, 3, 87-92 (2000) organisch-anorganische Hybridmembranen aus sulfoniertem Polyetheretherketon mit anorganischen Protonenleitern wie z.B. amorphes silica sowie deren Herstellung.

Aufgabe der vorliegenden Erfindung ist es, ein Verfahren zur Herstellung von Kompositmembranen anzugeben, nach dem Membranen mit verbesserter mechanischer Stabilität bei gleichzeitig verbesserter Protonenleitfähigkeit hergestellt werden können.

Gegenstand der vorliegenden Erfindung ist dementsprechend ein Verfahren zur Herstellung von Kompositmembranen wie beansprucht.

Unter einer Kompositmembran werden im Rahmen der vorliegenden Erfindung Membranen verstanden, die im wesentlichen aus Mischungen eines oder mehrerer organischer Polymere mit einem oder mehreren anorganischen Materialien bestehen. Das organische Polymer hat dabei die Funktion eines Protonenleiters, z.B. PEM (Polymer Elektrolyt Membran), während das anorganische Material z.B. für die Verbesserung der mechanischen Eigenschaften verantwortlich ist, indem es dem Kompositmaterial beispielsweise mehr Steifheit verleiht, und das Wasserhaltevermögen der Membran, auch unter austrocknenden Bedingungen, erhöht oder als Protonendonator oder Protonenakzeptor die Protonenleitfähigkeit des organischen Protonenleiters unterstützt. Es ist aber auch möglich, daß das anorganische Material hauptsächlich die Funktion eines Elektrolyten hat und das organische Polymer die Verbesserung der mechanischen Eigenschaften übernimmt, indem es dem Kompositmaterial beispielsweise mehr Flexibilität verleiht. Eine weitere Möglichkeit für Kompositmembranen sind Mischungen eines oder mehrerer organischer Polymere mit einem oder mehreren organischen Verstärkungsmaterialien wie z.B. PTFE- oder anorganische Fasern, Gewebe, Vliese oder verstreckten, porösen PTFE-Folien. Im Rahmen der vorliegenden Erfindung sind Mischungen eines oder mehrerer organischer Polymere mit einem oder mehreren anorganischen Materialien als Kompositmembranen bevorzugt.

Unter unverzweigten Polyalkoxysiloxanen werden polymere Alkoxysiloxane verstanden, die in ihren Molekülen im wesentlichen nur zweibindige $[SiO_2(OR)_2]$-Mitteleinheiten (mit R = H, Alkyl, Alkenyl, Aryl, Heteroaryl) in der Polymerkette und einbindige $[SiO(OR)_3]$-Endeinheiten aufweisen. Die Strukturen dieser Verbindungen sind von denen der kettenförmigen oder verzweigten Polykieselsäuren abgeleitet.

Unter verzweigten Polyalkoxysiloxanen werden polymere Alkoxysiloxane verstanden, die außerdem dreibindige $[SiO_3(OR)]$-Verzweigungseinheiten und vierbindige $[SiO_4]$-Doppelverzweigungseinheiten aufweisen. Auch die Strukturen dieser Verbindungen sind von denen der entsprechenden Polykieselsäuren abgeleitet, wobei die OH-Reste ebenfalls im wesentlichen gegen OR-Reste ersetzt sind (R = Alkyl).

Unter hochverzweigten Polyalkoxysiloxanen werden polymere Alkoxysiloxane verstanden, die einen sehr hohen Anteil an dreibindigen $[SiO_3(OR)]$-Verzweigungseinheiten und vierbindigen $[SiO_4]$-Doppelverzweigungseinheiten aufweisen. Bei diesen Verbindungen sitzt im wesentlichen an jeder n-ten $[SiO_2(OR)_2]$-Mitteleinheit der Polymerkette wenigstens eine $[SiO_3(OR)]$-Verzweigungseinheit und/oder $[SiO_4]$-Doppelverzweigungseinheit, wobei n im Bereich 1 bis 10, vorzugsweise 1 bis 7 und insbesondere 1 bis 4 liegt. Die Strukturen dieser Verbindungen sind von denen der amorphen Polykieselsäuren abgeleitet. Im Rahmen der vorliegenden Erfindung ist der Einsatz von hochverzweigten Polyalkoxysiloxanen besonders bevorzugt.

Der Verzweigungsgrad von Polyalkoxysiloxanen kann nach Frey (H. Frey et al., Acta Polym. 1997, 48, 30; H. Frey et al., Macromolecules 1998, 31, 3790) aus dem $^{29}$Si NMR berechnet werden.

Völlig lineare Polymere, z.B. völlig unverzweigte Polyalkoxysiloxane, weisen einen Verzweigungsgrad von 0 % auf, perfekte Dendrimere einen Verzweigungsgrad von 100 %. Im Rahmen der vorliegenden Erfindung werden unter verzweigten Polyalkoxysiloxane Polymere mit einem Verzweigungsgrad von weniger als 50 % verstanden und unter hochverzweigten Polyalkoxysiloxane Polymere mit einem Verzweigungsgrad von 50 % oder mehr.

Unter einem Kompositkomponentengemisch wird die Mischung aus den Komponenten für Herstellung einer Kompositmembran verstanden. Im vorliegenden Falle ist das eine Mischung, die zumindest ein verzweigtes Polyalkoxysiloxan und einen organischen Protonenleiter enthält.

Erfindungsgemäß geeignete Polyalkoxysiloxane weisen einen Verzweigungsgrad von 30 % oder mehr auf, vorzugsweise von 45 % oder mehr und insbesondere von 60 % oder mehr.

Polyalkoxysiloxane haben mit zunehmendem Verzweigungsgrad den Vorteil, daß sie in organischen Lösungsmitteln besser löslich sind als unverzweigte Polyalkoxysiloxane. Die Polyalkoxysiloxane können daher einerseits in einem organischen Lösungsmittel in einem breiten Konzentrationsbereich gelöst werden. Andererseits wird dadurch eine leichte und homogene Mischbarkeit der Polyalkoxysiloxane mit einem organischen Protonenleiter möglich.

Man nimmt an, daß die verzweigten, insbesondere hochverzweigten Polyalkoxysiloxane in der Kompositmembran Ionenkanäle mit besonders unregelmäßiger, d.h. zerklüfteter Oberfläche bilden.

Die Oberfläche der Ionenkanäle wird daher mit zunehmendem Verzweigungsgrad der eingesetzten Polyalkoxysiloxane größer und hält dadurch Wassermoleküle besser zurück, was sich vorteilhaft auf die Protonenleitfähigkeit der Kompositmembran auswirkt.

Die Kompositkomponenten umfassen wenigstens ein Polyalkoxysiloxan (PAOS) und wenigstens einen organischen Protonenleiter.

In einer bevorzugten Ausführungsform der vorliegenden Erfindung werden als organischer Protonenleiter organische Polymere eingesetzt, die für den Einsatz als Elektrolyte in PEM-Brennstoffzellen geeignet sind. Dazu gehören beispielsweise Arylpolymere wie Polyetherketone (PEK), Polyetheretherketone (PEEK), Polysulfone (PSU), Polybenzimidazole (PBI), Polyethersulfone (PES), Polyetherethersulfone (PEES), sowie Polyvinylpyrrolidone (PVP) und Polyglycoldialkylether (PG). Ferner gehören dazu beispielsweise auch die sulfonierten oder aminierten Spezies der vorstehend genannten Polymere, z.B. sulfonierte Polyetheretherketone (SPEEK), sowie sulfonierte Polytetrafluoroethylene wie z.B. Nafion. Auch Mischungen aus den vorstehend genannten Polymere sind geeignet. Im Rahmen der vorliegenden Erfindung sind sulfonierte Polyetheretherketone (SPEEK) besonders bevorzugt.

Mittels des erfindungsgemäßen Verfahrens kann die Protonenleitfähigkeit und die mechanische Stabilität von Membranen durch Zugabe von Polyalkoxysiloxan (PAOS) bei der Herstellung von Membranen aus polymeren Protonenleitern deutlich erhöht sowie die Quellung durch Wasser und wäßrige Lösungen vermindert werden.

Ein weiterer Vorteil ist, daß das Eigenschaftsprofil der Kompositmembranen durch Variation des Mischungsverhältnisses zwischen Polyalkoxysiloxan und organischem Protonenleiter gezielt an die Anforderungen beim Einsatz in Brennstoffzellen angepaßt werden kann.

Ein weiterer Vorteil des erfindungsgemäßen Verfahrens besteht in der Möglichkeit, gezielt spezielle Polyalkoxysiloxane herzustellen. So können beim erfindungsgemäßen Verfahren die Polyalkoxysiloxan-Precursor - entsprechend Alkoxy-substituierte Silanole - in einem organischen Lösungsmittel gezielt zu dem gewünschten Polyalkoxysiloxan kondensiert und erst danach mit dem organischen Protonenleiter vermischt werden. Bei Verfahren des Standes der Technik werden dagegen die Polyalkoxysiloxan-Precursor zuerst mit einem organischen Protonenleiter vermischt und erst dann kondensiert, was nur eine schlechte Steuerung der Kondensationsreaktion gestattet.

Die Kondensationsreaktion ist in folgendem Schema beispielhaft wiedergegeben:

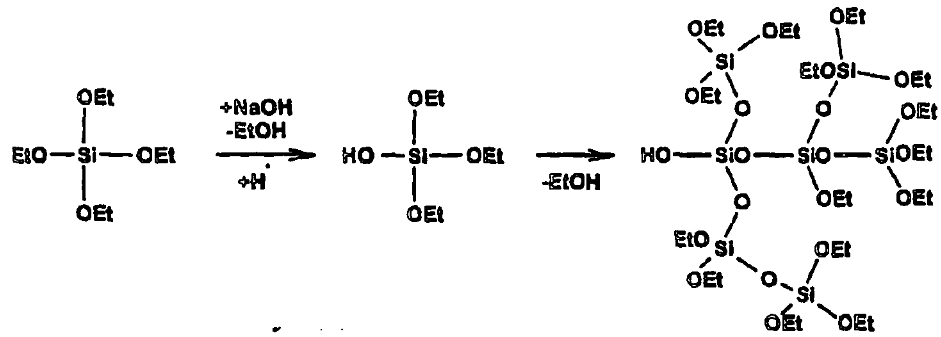


In einer vorteilhaften Variante der vorliegenden Erfindung weist das Verfahren folgenden Schritte auf:

a) Lösen eines verzweigten Polyalkoxysiloxans in einem Lösungsmittel;
b) Lösen eines organischen Protonenleiters in einem Lösungsmittel;
c) Mischen der Lösung des verzweigten Polyalkoxysiloxans mit der Lösung des organischen Protonenleiter;
d) Herstellen einer Membran aus dem Kompositkomponentengemisch.

Dabei ist es vorteilhaft, wenn für das Lösen aller Kompositkomponenten das gleiche Lösungsmittel eingesetzt wird.

Durch Variation des Verhältnisses der Lösungen der Kompositkomponenten können Membranen unterschiedlicher Zusammensetzung erhalten werden.

Das Herstellen der Membran kann durch Gießen, Rakeln oder Verteilen der Kompositkomponenten, insbesondere von Lösungen der Kompositkomponenten, auf der Wand eines sich drehenden Zentrifugenbechers und anschließendem Abdampfen des Lösungsmittels hergestellt werden.

In einer weiter bevorzugten Variante der Erfindung werden der Kompositmembran Heteropolysäuren zugemischt. Die Heteropolysäuren sind dann ein weiterer Bestandteil des Kompositkomponentengemischs. Die Zumischung kann entweder zu einer gemeinsamen Lösung der Kompositkomponenten vor der Membranherstellung erfolgen oder nach der Membranherstellung durch Nachkonditionieren der bereits hergestellten Membranen mit einer Lösung der Heteropolysäuren. Der Zusatz von wasserhaltigen Heteropolysäuren kann zur Hydrolyse der Polyalkoxysiloxane beitragen.

Als Heteropolysäure hat sich beispielsweise Phosphorwolframsäurehydrat (HPWA) als geeignet erwiesen. Unter Phosphorwolframsäure wird Wolframatophosphorsäure-Hydrat der Formel $H_3[P(W_3O_{10})_4]\cdot x\ H_2O$ verstanden (z.B. Firma Merck).

Der wesentliche Vorteil von Kompositmembranen ist, daß Membranaufbau bzw. Membraneigenschaften durch Variation der Kompositkomponenten sowie des Mischungsverhältnisses gezielt optimiert werden können.

Die Polyalkoxysiloxane bilden in der Membran strukturell starre, fein verteilte, poröse Si-Oxide mit zeolithartigen Strukturen. Darin besteht ein weiterer Vorteil der erfindungsgemäßen Kompositmembranen. Diese zeolithartigen Strukturen können nämlich bestimmte Wassermengen stark binden und dadurch den Hydratationszustand des organischen Protonenleiters regulieren. .

Ergebnis des erdindungsgemäßen Verfahrens ist eine Kompositmembran, die wenigstens ein silicatisches Verstärkungsmaterial und wenigstens einen organischen Protonenleiter enthält, wobei das silicatische Verstärkungsmaterial wenigstens teilweise in Form von feindispers verteilten, kugelförmigen Teilchen vorliegt.

Hinsichtlich der Alkoxygruppen der Polyalkoxysiloxane muß berücksichtigt werden, daß diese Gruppen leicht hydrolysierbar sind und daher im Verlaufe der Herstellung der Membran durch anwesendes Wasser abgespalten werden

können, so daß streng genommen beim Herstellen der Kompositmembranen bereits wenigstens teilweise hydrolysierte Polyalkoxysiloxane vorliegen. Hydrolysiert werden können die Polyalkoxysiloxane auch beim Nachbehandeln der Membranen oder/und bei der Zugabe wasserhaltiger Heteropolysäure. Spätestens beim des Einsatz der das Polyalkoxysiloxan enthaltenden Kompositmembran als PEM in einer Brennstoffzelle werden praktisch alle Alkoxygruppen abgespalten. Durch die Hydrolyse der Polyalkoxysiloxane entsteht das oben erwähnte silicatische Material.

In einer bevorzugten Ausführungsform der Erfindung weisen die kugelförmigen silicatischen Teilchen eine Teilchengröße von 5 μm oder weniger auf.

Die mit dem erfindungsgemäßen Verfahren hergestellten, vorstehend beschriebenen Kompositmembranen können in PEM-Brennstoffzellen verwendet werden.

Die Erfindung wird im folgenden anhand von Ausführungsbeispielen näher erläutert.

Die Figuren zeigen:

**Figur 1:** $^{29}$Si NMR Spektrum von Natriumtriethoxysilanolat, gelöst in einer Toluol/Toluol-d8 Mischung (Volumenverhältnis 1/1). Der Peak bei 76,1 ppm entspricht dem Si-Atom in den Natriumtriethoxysilanolat-Molekülen.

**Figur 2:** $^{29}$Si NMR Spektrum von Triethoxysilanol und oligomeren Spezies, die bei -70°C gebildet wurden, aufgenommen bei -30°C.

**Figur 3:** $^{29}$Si NMR Spektrum von Polyethoxysiloxan, gelöst in Toluol-d8. Es zeigt fünf Peaks, die Si-Atomen zugeordnet werden können (von links nach rechts), die vier, drei, zwei, ein und null Ethoxy-Gruppen tragen, bzw. null, eine, zwei, drei und vier Siloxan-Substituenten, aber keine Hydroxy-Gruppen.

**Figur 4:** (a) Brechungsindex-Signal von einem Polymer, das mit THF von der SEC eluiert wird (b) Veränderung des Brechungsindex mit dem Elutionsvolumen, für die Berechnung der Gewichtsfraktionen des Polymers aus den Brechungsindex-Signalen (c) universelle Kalibrierkurve des SEC-Systems, die aus viskosimetrischen Messungen der fraktionierten Polyethoxysiloxan abgeleitet wird, für die Berechnung der Molekülmassen aus dem Elutionsvolumen.

**Figur 5:** Molekülmassenverteilung von Polyethoxysiloxan, berechnet aus den Brechungsindex-Signalen des eluierten Polymers (Figur 4a), eine experimentell bestimmte Funktion der Veränderung von dn/dc mit dem Elutionsvolumen (Figur 4b) und die universelle Kalibrierkurve (Figur 4c).

**Figur 6:** FTIR-Spektrum von SPEEK-7 Die Pfeile markieren die Absorptionsbanden bei 1249 $cm^{-1}$, 1079 $cm^{-1}$, 1019 $cm^{-1}$ und 706,8 $cm^{-1}$.Diese können den Schwingungen der $SO_3H$ Gruppe zugeordnet werden. Die Absorptionsbande bei 1019 $cm^{-1}$ wird der asymetrischen Streckschwingung von O=S=O zugeordnet, bei 1079 $cm^{-1}$ liegt die symmetrische Streckschwingung der O=S=O Einheit, bei 1249 $cm^{-1}$ die Streckschwingung von S=O und bei 706,8 $cm^{-1}$ die Streckschwingung von S-O.

**Figur 7:** TGA Diagramm von SPEEK-1 gemessen in einer Sauerstoffatmosphäre mit einer Heizrate von 2 K/min. Der bis 170°C auftretende Massenverlust (1) kann der Freisetzung von in der Membran gebundenem Wasser zugeordnet werden. Der ab 250°C eintretende Massenverlust (2) muß auf die Zersetzung des Membranmaterials zurückgeführt werden.

**Figur 8:** Skizze des für die Membranbildung mittels Zentrifuge verwendeten Zentrifugenbechers. Die Membranbildung erfolgt durch Auftropfen der Lösung bei hoher Umdrehungsgeschwindigkeit der Zentrifuge auf die abgerundete Erhebung in der Mitte des Einsatzes. Dadurch wird die Lösung auf die Wand des Bechers befördert.

**Figur 9:** Rasterelektronenmikroskopische Aufnahme einer durch Zentrifugieren hergestellten Membran, hergestellt mit 30 Gew% PAOS in SPEEK, ohne Phosphorwolframsäure.

**Figur 10:** Rasterelektronenmikroskopische Aufnahmen einer durch Gießen einer Phosphorwolframsäure enthaltenden SPEEK/PAOS Lösung hergestellten Membran, enthaltend 30 Gew% HPWA/PAOS in SPEEK.

**Figur 11:** Rasterelektronenmikroskopische Aufnahme einer durch Gießen hergestellten Membran, enthaltend 30 Gew% HPWA/PAOS in SPEEK, wobei die enthaltene Phosphorwolframsäure durch Nachkonditionierung in die Membran eingebracht wurde.

**Figur 12:** Transmissionselektronenmikroskopische Aufnahmen einer durch Gießen einer Phosphorwolframsäure enthaltenden SPEEK/PAOS Lösung hergestellten Membran.

**Figur 13:** Temperaturabhängiges Quellverhalten einer reinen SPEEK Membran in Wasser ( ■ ) im Vergleich zu einer Kompositmembran ( ● ).

**Figur 14:** Thermogravimetrische Analyse einer Kompositmembran mit 30 Gew% anorganischem Materialanteil in einer Sauerstoffatmosphäre, aufgenommen mit einer Heizrate von 2 K/min.

**Figur 15:** Links: Protonenleitfähigkeiten bei Raumtemperatur von Kompositmembranen mit unterschiedlichen Anteilen an PAOS+HWPA in der Membran. Rechts: Protonenleitfähigkeit einer Kompositmembran mit 30 Gew% PAOS/HWPA Anteil in Abhängigkeit der Temperatur (HWPA/PAOS Verhältnis beträgt 48/52 Gew%).

Beispiel

Die nachfolgende Herstellung einer erfindungsgemäßen Kompositmembran gliedert sich in 3 Schritte:

1. Synthese eines hochverzweigten Polyalkoxysiloxans
2. Synthese eines sulfonierten Polyetheretherketons (SPEEK)
3. Herstellung einer Membran

**1.) Synthese eines hochverzweigten Polyalkoxysiloxans**

Die Ausgangsmaterialien wurden wie folgt für die Verwendung bei der Synthese des Polyalkoxysiloxans vorbereitet.

Natriumhydroxid (Merck, p.a.) wurde unter einer Atmosphäre aus trockenem Argon mit einer Hammermühle (Framo Gerätetechnik, Eisenach, Germany) gemahlen. Argon 4.6 (MIT, Elchingen, Germany) wurde über einer 5x50 cm Säule, die mit Phosphorpentoxid gefüllt war, getrocknet. Ammoniak 3.8 (Messer-Griesheim, Krefeld, Germany) wurde über Natriumhydroxid-Pellets getrocknet. Tetraethoxysilan (Merck), Ethanol (Seccosolv TM, Merck) und Essigsäure (purum, >99%, Fluka) wurden ohne weitere Reinigung eingesetzt. Toluol (technische Reinheit) wurde über Lithiumaluminiumhydrid (Merck) getrocknet und unter Argonatmosphäre destilliert. Molekülmassen und Molekülmassen-Verteilungen von PAOS wurden mit Hilfe der Size Exclusion Chromatographie, SEC, (Gelpermeationschromatographie, GPC) mit Tetrahydrofuran (THF, p.a., Merck) als Lösungsmittel erhalten. Das Setup besteht aus Waters μ-Styragel Säulen mit nominellen Porengrößen von $10^6$, $10^5$, $10^4$, $10^3$ and 500 Å und einer Schutzsäule. Die Probendetektion wurde mit einem Waters 410 Differential Refraktometer und einem parallel verbundenen Viscotek H502B Differential Viscometer durchgeführt, die die Bestimmung absoluter Molekulargewichte erlauben sowie eine Universal-Kalibrierung. Alle Filtrationen wurden mit einer Inertgas-Fritte (Porengröße n°4) durchgeführt.

1.1.) Synthese von Natriumoxytriethoxysilan

40 g (1 mol) pulverisiertes Natriumhydroxid wurde bei 5°C unter Rühren zu einer Lösung von 208 g (1 mol) Tetraethoxysilan in 500 ml Toluol gegeben. Nach 2 h Rühren wurde das Toluol und das Ethanol, das während der Reaktion entstand, mit einem Rotationsverdampfer mit Membranpumpe abdestilliert. Der ölige Rückstand wurde über Nacht in einer Vakuum-Kammer bei 50 mbar/40°C getrocknet (Ausbeute 182 g). 92 g dieses Feststoffs wurden in 270 ml Toluol gelöst und das unlösliche Nebenprodukt durch Filtration entfernt.

1.2.) Synthese von Triethoxysilanol

Die gemäß der obigen Reaktion erhaltene Natriumoxytriethoxysilanolat-Lösung wurde mit Toluol auf ein Gesamtvolumen von 500 ml aufgefüllt. Dann wurde diese Lösung unter Rühren bei 0°C zu einer Lösung aus einer stöchiometrischen Menge Essigsäure in 300 ml zugetropft. Nach Abfiltrieren des ausgefallenen Natriumacetats und Waschen mit Toluol wurde die Toluol-Lösung bei 8 mbar/30°C bis zur Trockne eingeengt. Als Rückstand wurden 38,3 g einer gelben Flüssigkeit erhalten.

1.3.) Synthese von Polyethoxysiloxan

Polyethoxysiloxan wurde durch Zugabe des erhaltenen Triethoxysilanols zu einer Lösung von 6,5 g Ammoniak in 100 ml Ethanol bei -30°C über einen Zeitraum von 1 h synthetisiert. Nach Erwärmen bis auf Raumtemperatur und

Stehenlassen über Nacht wurde das Ethanol und restliches Ammoniak abdestilliert, wobei 30,3 g einer gelben Flüssigkeit zurückblieben. Trocknen dieses Rückstandes am Ölpumpenvakuum ergab 29,7 g Polyethoxysiloxan.

1.4.) Charakterisierung der Produkte

**Natriumoxytriethoxysilanolat:** Das Natriumoxytriethoxysilanolat wurde mit Hilfe von $^{29}Si$ NMR (Figur 1) untersucht. Das Spektrum besteht aus einem einzigen Peak bei -76,1 ppm, was darauf hinweist, daß die synthetisierte Verbindung zu 99% rein ist.

**Triethoxysilanol:** Das gemäß obigem Verfahren erhaltene "Triethoxysilanol" beginnt bereits ohne Ammoniak als Katalysator zu kondensieren. Ein $^{29}Si$ NMR Spektrum (Figur 2) das kurz nach Neutralisation bei -75°C aufgenommen wurde, zeigt daß Triethoxysilanol (Peak bei -78,6 ppm) und entstehende kondensierte Spezies (Signale bei -85,9 ppm, -88,7 ppm und -95,3 ppm) nebeneinander vorliegen. Nach verlängerter Lagerung bei Raumtemperatur besteht das Material vorwiegend aus oligomeren Spezies.

**Polyethoxysiloxan:**

**Molekülstruktur:** Das erhaltene Polyethoxysiloxan wurde mit $^{29}Si$ NMR charakterisiert. Das $^{29}Si$ NMR Spektrum (Figur 3) zeigt fünf Peaks, die Si-Atomen mit (von links nach rechts) vier, drei, zwei, einer oder null Ethoxy-Gruppen bzw. null, einem, zwei, drei und vier Siloxan-Substituenten zugeordnet werden können, aber keine Hydroxy-Gruppen. Das Erscheinen von Tetraethoxysilan (Peak bei -81 ppm) und Schultern auf der linken Seite des Hauptpeaks zeigen, daß die Bildung von starren Ringen als Nebenreaktion auftritt, die mit der Polykondensation des Triethoxysilanols konkurriert.

**Verzweigungsgrad:** In Figur 3 können fünf verschiedene Peakgruppen unterschieden werden, die von links nach rechts Siliciumatomen zugeordnet werden können, die 4, 3, 2, 1 und 0 Ethoxy-Gruppen tragen und ebenfalls von links nach rechts an 0, 1, 2, 3 und 4 weiteren Siliciumatome über Sauerstoffbrücken gebunden sind. Im Folgenden seien diese Siliciumatome gekennzeichnet durch die Abkürzung $Q^i$ wobei i die Anzahl von benachbarten Siliciumatome - gebunden über Sauerstoffatome - angibt.

Anolog zu Frey's Definition des Verzweigungsgrades in Polymeren (H. Frey et al., Acta Polym. 1997, 48, 30; H. Frey et al., Macromolecules 1998, 31, 3790), die aus $AB_3$ Monomeren synthetisiert werden, kann man den Verzweigungsgrad in Polydiethoxysiloxan gemäß Gleichung 1 definieren:

$$DB = \frac{2Q^4 + Q^3}{\frac{2}{3}(3Q^4 + 2Q^3 + Q^2)} \qquad \text{Gleichung 1}$$

Unter Verwendung der integrierten Peakflächen des $^{29}Si$ NMR Spektrums in Figur 3 ergibt sich ein Verzweigungsgrad des erfindungsgemäßen Polydiethoxysiloxans von 61.2%.

**Molekularmassenverteilung:** Die Molekularmassenverteilung des Polymers aus Figur 5 wurde mit Hilfe von Size Exclusion Chromatographie, SEC, (Gelpermeationschromatographie, GPC) in THF erhalten. Die Gewichtsfraktionen des Polymers wurden mit Baseline- und Flußkorrektur der Brechungsindex-Signale berechnet (Figur 4a), welche dann durch eine experimentell bestimmte dn/dc Funktion geteilt wurde (Figur 4b). Die universelle Kalibrierkurve wurde dann für die Berechnung der Molekularmassen benutzt (Figur 4c). Nach diesen Berechnungen weist das Polymer eine mittlere molekulare Masse von 3,8 kg/mol und eine gewichtete mittlere molekulare Masse von 7,4 kg/mol auf.

**2.Synthese von sulfoniertem Polyethetherketon (PEEK)**

**Synthese:** In einem Dreihals-Reaktionsgefäß wurden 20 g PEEK (Victrex, 450PF: universelles Feinpulver für das Beschichten und Pressformen) in 1 Liter 95 bis 98 Gew% Schwefelsäure bei Raumtemperatur gelöst. Dann wurde die Reaktionslösung 24 bis 120 h (siehe Tabelle 1) gerührt und danach in Wasser eingetropft. Das sulfonierte PEEK fiel aus. Das sulfonierte PEEK wurde mit Wasser mehrmals gewaschen, bis das Waschwasser einen pH-Wert

zwischen 6 und 7 aufwies. Das Produkt wurde danach im Ölpumpenvakuum für 10 bis 24 h bei 100°C getrocknet.

**Charakterisierung:** Die oben erhaltenen Polymere wurden mittels Elementaranalyse, Titration, Infrarotspektroskopie, thermogravimetrischer Analyse und Impedanzspektroskopie charakterisiert. Die mittels Elementaranalyse und Titration erhaltenen Eigenschaften sowie die Quellung und Proton-Leitfähigkeit sind in Tabelle 1 zusammengefaßt. Zur Bestimmung der Ionenaustauschkapazität wurde mit 0,1 normaler Natriumhydroxid-Lösung titriert.

Basierend auf der Normvorschrift für die Untersuchung der Quellung von Kunststoffen (DIN 53495) wurde die Membranquellung wie folgt ermittelt:

> Eine Membranprobe mit 0,5 bis 6 g Masse wurde in Wasser gelegt. Danach wurden die Probe und das Wasser auf die Prüftemperatur gebracht. Nach Ablauf der Prüfdauer (48 bis 72 h) wurden die Probe und das Wasser auf Raumtemperatur abgekühlt. Anschließend wurde die Membranprobe herausgenommen, mit Zellstofftüchern oberflächlich abgetrocknet und das Gewicht der gequollenen Membran $W_{sw}$ bestimmt. Die Zeitspanne zwischen Entnahme und Messung wurde so gering wie möglich gehalten. Danach wurde die Membranprobe im Trokkenschrank bis zur Gewichtskonstanz getrocknet und das Trockengewicht $W_{dry}$ ermittelt. Die Quellung der Membran wurde dann nach folgender Gleichung berechnet werden:

$$\text{Que}\ (\%) = 100\,(W_{sw} - W_{dry})/W_{dry}$$

**Tabelle 1: Ausgewählte Eigenschaften einiger sulfonierter PEEK Polymere**

| ID | Reaktionszeit [h] | Ionenaustauschkapazität [meq/g] | $SO_3^-$Gruppen pro Repetiereinheit basierend auf Titration | Elementaranalyse C/H/S gefunden (Berechnung basiert auf Titration) [Gew%] | $SO_3^-$Gruppen pro Repetiereinheit basierend auf S- und C- Elementaranalyse | Quellung (%) bei 80°C/95°C | Protonenleitfähigkeit S/cm |
|---|---|---|---|---|---|---|---|
| SPEEK 1 | 120 | 2,05 | 0,71 | 61,0/4,0/5,6 (66,1/3,5/6,6) | 0,65 | Auflösung | $3,32\cdot10^{-}$[illegible] |
| SPEEK 2 | 120 | 2,1 | 0,73 | n.d. | -- | -- | -- |
| SPEEK 3 | 115 | 1,99 | 0,68 | n.d. | -- | --- | -- |
| SPEEK 4 | 70 | 1,62 | 0,54 | 68,0/3,8/5,0 (68,8/3,6/5,3) | 0,52 | 98/Auflösung | $7,15\cdot10^{-3}$ |
| SPEEK 5 | 70 | 1,65 | 0,55 | 67,0/4,1/5,0 (68,7/3,6/5,3) | 0,53 | 130/Auflösung | $1,18\cdot10^{-2}$ |
| SPEEK 6 | 95 | 1,8 | 0,61 | n.d. | -- | -- | -- |
| SPEEK 7 | 40 | 1,35 | 0,44 | 67,5/4,0/4,1 (70,5/3,7/4,4) | 0,43 | 40/184 | $5,57\cdot10^{-3}$ |

Neben der Untersuchung mittels Elementaranalyse und Titration wurde die Struktur der sulfonierten PEEK Polymere weiterhin mittels Infrarotspektroskopie ermittelt. In Figur 6 ist beispielhaft das FTIR-Spektrum von SPEEK-7 dargestellt. Die Absorptionsbanden bei 1249 $cm^{-1}$, 1079 $cm^{-1}$, 1019 $cm^{-1}$ und 706,8 $cm^{-1}$ können den Schwingungen der $SO_3H$ Gruppe zugeordnet werden. Die Absorptionsbande bei 1019 $cm^{-1}$ kann der asymetrischen Streckschwingung von O=S=O zugeordnet werden, bei 1079 $cm^{-1}$ liegt die symmetrische Streckschwingung der O=S=O Einheit, bei 1249 $cm^{-1}$ die Streckschwingung von S=O und bei 706,8 $cm^{-1}$ die Streckschwingung von S-O.

Eine weitere Untersuchungsmethode stellt die thermogravimetrische Analyse (TGA) der Polymere in einer Sauerstoffatmosphäre dar. In Figur 7 ist beispielhaft ein TGA Diagramm von SPEEK-1 dargestellt. Der bis 170°C auftretende Massenverlust (1) kann der Freisetzung von in der Membran gebundenem Wasser zugeordnet werden. Der ab 250°C eintretende Massenverlust (2) muß auf die Zersetzung des Membranmaterials zurückgeführt werden. Die ungefüllte Membran kann im Sauerstoffstrom rückstandsfrei zersetzt werden.

**3.Herstellung der Kompositmembranen**

**Synthese:** Die Kompositmembranen wurden durch Mischen von Lösungen der einzelnen Bestandteile in einem gemeinsamen Lösungsmittel und darauffolgendes Gießen, Rakeln oder Verteilen der Lösung auf der Wand eines sich drehenden Zentrifugenbechers und anschließendem Abdampfen des Lösungsmittels hergestellt. Heteropolysäuren wurden entweder der gemeinsamen Lösung vor der Membranherstellung zugefügt oder wurden durch Nachkonditionieren bereits hergestellter Membranen mit einer Lösung der Heteropolysäuren in die Membranen eingebracht. Die Bestandteile der Kompositmembranen umfassten sulfoniertes Polyetheretherketon Polymer (SPEEK), Polyalkoxysiloxan (PAOS) und Phosphorwolframsäurehydrat (HPWA, puriss., Fluka). Beispielhaft seien Synthesen mit N-Methylpyrrolidon (NMP) als gemeinsames Lösungsmittel beschrieben. Alternativ können auch Mischungen von NMP mit niederen Alkoholen verwendet werden.

Vor Verwendung des N-Methylpyrrolidons wurde dieses mit einem Molekularsieb getrocknet. Hierbei wurde das N-Methylpyrrolidon durch eine mit Molekularsieb gefüllte Säule geleitet und anschließend 72 h über Molekularsieb aufbewahrt. Das erhaltene NMP enthielt nach Karl-Fischer Titration weniger als 0,02 Gew.% Wasser.

Nach Herstellung einer 5 Gew%igen Lösung von SPEEK in diesem so getrocknetem NMP und einer 1,65 Gew%iger Lösung von PAOS in NMP wurden diese gemischt, indem die SPEEK Lösung mit der PAOS Lösung versetzt wurde. Durch Variation des Verhältnisses der beiden Lösungen konnten Membranen unterschiedlicher Zusammensetzung erhalten werden. Zur Membranherstellung mit Phoshorwolframsäure als weiterem Bestandteil wurde zur Lösung des SPEEK in NMP eine alkoholische Lösung von PAOS und Phosphorwolframsäure zugegeben (9 Gew%; Massenverhältnis PAOS/HWPA falls nicht anders beschrieben: 69/31). Diese Lösung wurde zur Lösung aus SPEEK in NMP zugegeben. In Abweichung von diesem Verfahren kann die Phosphorwolframsäure auch durch Nachkonditionieren bereits hergestellter PAOS/SPEEK Membranen mit einer 10 Gew%iger Phosphorwolframsäure-Lösung in die Membranen eingebracht werden.

Die Membranherstellung selbst erfolgte durch Gießen, Rakeln oder Zentrifugieren der oben beschriebenen Lösungen. Nachfolgend sei beispielhaft die Membranherstellung mittels Gießen und Zentrifugieren beschrieben.

Um Membranen mittels Gießen zu erhalten, wurde die oben hergestellte Lösung in eine Glasschale gegossen. Es bildete sich ein dünner Film. Alternativ kann ein Film mit einer Rakel auf einer flachen Unterlage ausgezogen werden. Daraufhin wurde das im Film enthaltene Lösungsmittel mit Hilfe einer Heizplatte bei 120 bis 130°C in einem Zeitraum von 25 bis 40 min abgedampft. Enthielt die Lösung auch Phosphorwolframsäure, wurde der Film in Abweichung zu obigem Verfahren zuerst 15 min bei 90°C getrocknet und danach bei 120 bis 130°C für 20 bis 30 min.

Zur Herstellung der Kompositmembranen mittels einer Zentrifuge wurde die Lösung der Bestandteile mit einer Injektionsspritze in eine sich drehenden Zentrifugenbecher (Drehzahl 15000/min; Durchmesser 10 cm; Höhe 3 cm; siehe Figur 8) eingespritzt. Beim Auftropfen bei hoher Umdrehungsgeschwindigkeit der Zentrifuge auf die abgerundete Erhebung in der Mitte des Einsatzes wurde die Lösung auf die Wand des Zentrifugenbechers befördert und bildete dort nach einigen Minuten einen gleichmäßigen Film. Das Lösungsmittel wurde mit einem Heißluftgebläse in einem Zeitraum von 40 min abgedampft. Der trockene Film wurde von der Becherwand abgelöst.

**Charakterisierung der Kompositmembranen:** Die Charakterisierung erfolgte mit Rasterelektronenmikroskopie, Transmissionselektronenmikroskopie, Leitfähigkeitsmessungen, Quellungsmessungen und thermogravimetrischen Analysen.

**Rasterelektronenmikroskopie (SEM):** Die Figuren 9 bis 11 zeigen beispielhaft rasterelektronenmikroskopische Aufnahmen von Membranen mit einem Verhältnis von PAOS zu SPEEK von 30/70 Gew%.

Figur 9 gibt die rasterelektronenmikroskopische Aufnahme einer Membran wieder, die keine Phosphorwolframsäure

enthält und mittels Zentrifuge hergestellt wurde.
In Figur 10 ist die SEM Aufnahme einer Membran wiedergegeben, die aus einer Phosphorwolframsäure enthaltenden SPEEK/PAOS Lösung durch Gießen abgeschieden wurde.
In Figur 11 ist die Aufnahme einer Membran dargestellt, die im Gegensatz zu der Membran in Figur 10 durch Nachkonditionieren mit Phosphorwolframsäure hergestellt wurde.
Man erkennt auf allen drei Figuren eine kontinuierliche Phase, in die kugelförmige Objekte mit Durchmessern zwischen 0,5 und 3 μm eingebettet sind. Es lassen sich jedoch außer einer Größenvariation der Partikel keine generellen Unterschiede in Form und Struktur der Partikel erkennen, die auf die unterschiedliche Zusammensetzung und Herstellungsweise zurückgeführt werden könnten.

**Transmissionselektronenmikroskopie (TEM):** Die Transmissionselektronenmikroskopie ist auflösungsstärker als die Rasterelektronenmikroskopie und erlaubt die Abbildung von Strukturen, die mit Rasterelektronenmikroskopie nicht beobachtet werden können. In Figur 12 sind beispielhaft transmissionselektronenmikroskopische Aufnahmen der "kontinuierlichen Phase" einer durch Gießen einer Phosphorwolframsäure enthaltenden SPEEK/PAOS Lösung hergestellten Membran dargestellt (PAOS/SPEEK 30/70 Gew%). Man erkennt, daß die im SEM kontinuierlich erscheinende Matrix ebenfalls aus einem phasenseparierten Material mit Strukturen von ungefähr 10 nm besteht. Der Kombination aus SEM und TEM zufolge, liegt das anorganische Material in den Membranen in zwei unterschiedlichen Formen vor, die sich in ihrer Größe um mehr als eine Größenordnung unterscheiden.

**Quellverhalten:** Figur 13 zeigt ein Diagramm, in dem das Quellverhalten der Membranen in Wasser in Abhängigkeit der Temperatur dargestellt ist. Verglichen wird eine Kompositmembran mit einer Membran aus reinem SPPEK. Man erkennt ein stark vermindertes Quellverhalten der Kompositmembran insbesondere bei Temperaturen größer als 80°C.

**Thermische Stabilität (TGA):** Figur 14 zeigt ein Diagramm einer thermogravimetrischen Analyse einer Kompositmembran mit 30 Gew% anorganischem Material. Im Temperaturbereich bis 100°C verliert die Membran ungefähr 13 % ihrer ursprünglichen Masse. Der auftretende Massenverlust kann der Freisetzung von in der Membran physikalisch gebundenem Wasser zugeordnet werden. Bei Temperaturen von 230 bis 400°C kann der ca. 7%ige Massenverlust der Freisetzung von in der Membran chemisch gebundenem Wasser und der Zersetzung der $SO_3H$-Gruppen zugeordnet werden. Ab 400°C zersetzen sich die Memranmaterialien sehr stark. Über 450°C findet keine Massenabnahme mehr statt. Es bleibt ein Pyrolyserückstand zurück, dessen Masse den enthaltenen anorganischen Anteil angibt.

**Protonenleitfähigkeit:** Figur 15 zeigt zwei Diagramme, in denen die Protonenleitfähigkeiten verschiedener Kompositmembranen dargestellt sind.

Rechts: die Kompositmebranen enthalten 30 Gew% Phosphorwolframsäure und PAOS bezogen auf SPEEK, das Verhältnis von Phosphorwolframsäure und PAOS zueinander beträgt 48 zu 52 Gewichtsanteile. Bei Steigerung der Meßtemperatur von 25°C auf 120°C erhöht sich die Protonenleitfähigkeit um den Faktor 7.

Links: mit zunehmendem anorganischem Materialanteil wird eine um den Faktor 6 höhere Protonenleitfähigkeit beobachtet.

## Patentansprüche

1. Verfahren zur Herstellung von Kompositmembranen enthaltend wenigstens ein silicatisches Verstärkungsmaterial und wenigstens einen organischen Protonenleiter, **dadurch gekennzeichnet, daß** das silicatische Verstärkungsmaterial wenigstens teilweise in Form von feindispers verteilten, kugelförmigen Teilchen vorliegt, **gekennzeichnet, durch** die Schritte

   a) Bereitstellen eines verzweigten Polyalkoxysiloxans mit einem Verzweigungsgrad von 30 % oder mehr;
   b) Bereitstellen eines organischen Protonenleiters;
   c) Mischen des verzweigten Polyalkoxysiloxans mit dem organischen Protonenleiter;
   d) Herstellen einer Membran aus dem Kompositkomponentengemisch, wobei das silicatische Verstärkungsmaterial aus der Hydrolyse des verzweigten Polyalkoxysiloxans mit einem Verzweigungsgrad von 30% oder mehr erhalten wird.

## Claims

1. A method of forming a composite membrane comprising at least one silicatic reinforcing material and at least one organic proton conductor, **characterized in that** the silicatic reinforcing material is at least partly present in the form of finely dispersed spherical particles, **characterized by** the steps of

   a) providing a branched polyalkoxysiloxane having a degree of branching of 30% or more;
   b) providing an organic proton conductor;
   c) mixing the branched polyalkoxysiloxane with the organic proton conductor;
   d) forming a membrane from the composite component mixture,

   wherein the silicatic reinforcing material is obtained from the hydrolysis of the branched polyalkoxysiloxane having a degree of branching of 30% or more.

## Revendications

1. Procédé de fabrication de membranes composites contenant au moins un matériau de renforcement siliceux et au moins un conducteur de protons organique, **caractérisé en ce que** le matériau de renforcement siliceux se présente au moins partiellement sous la forme de particules sphériques finement dispersées, **caractérisé par** les étapes de

   a) mise à disposition d'un polyalcoxysiloxane ramifié ayant un degré de ramification supérieur ou égal à 30 % ;
   b) mise à disposition d'un conducteur de protons organique ;
   c) mélange du polyalcoxysiloxane ramifié avec le conducteur de protons organique ;
   d) fabrication d'une membrane à partir du mélange composite de composants,

   le matériau de renforcement siliceux étant obtenu à partir de l'hydrolyse du polyalcoxysiloxane ramifié ayant un degré de ramification supérieur ou égal à 30%.

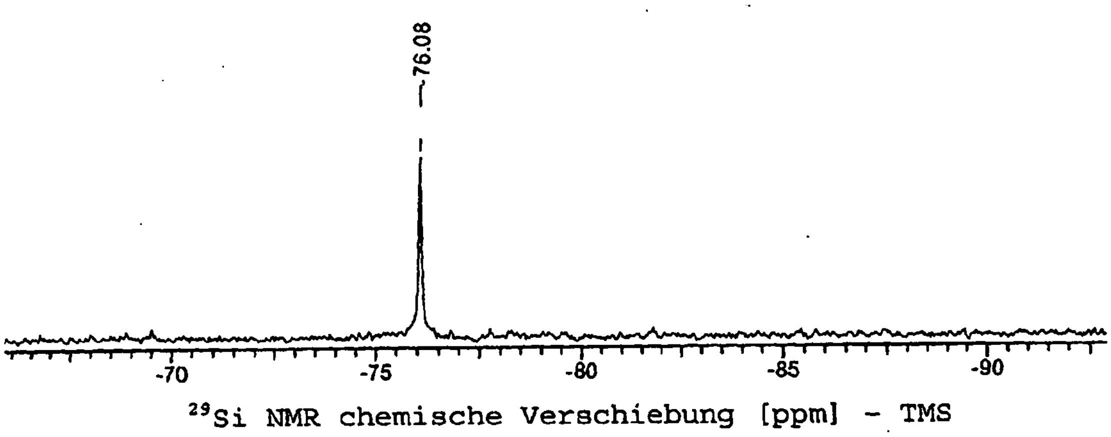


**Figur 1**

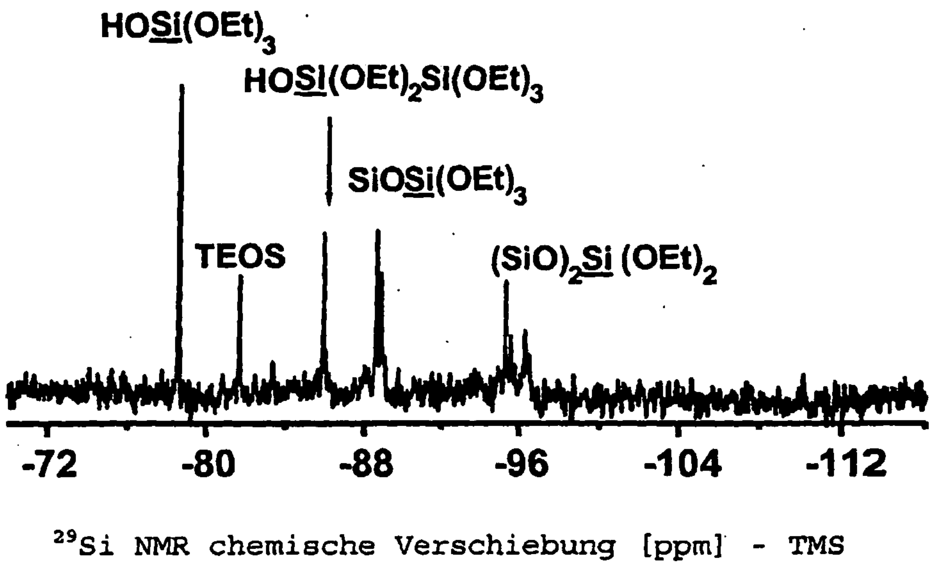
HOSi(OEt)3
HOSi(OEt)2Si(OEt)3
SiOSi(OEt)3
TEOS
(SiO)2Si (OEt)2
-72
-80
-88
-96
-104
-112
29Si NMR chemische Verschiebung [ppm] - TMS

Figur 2

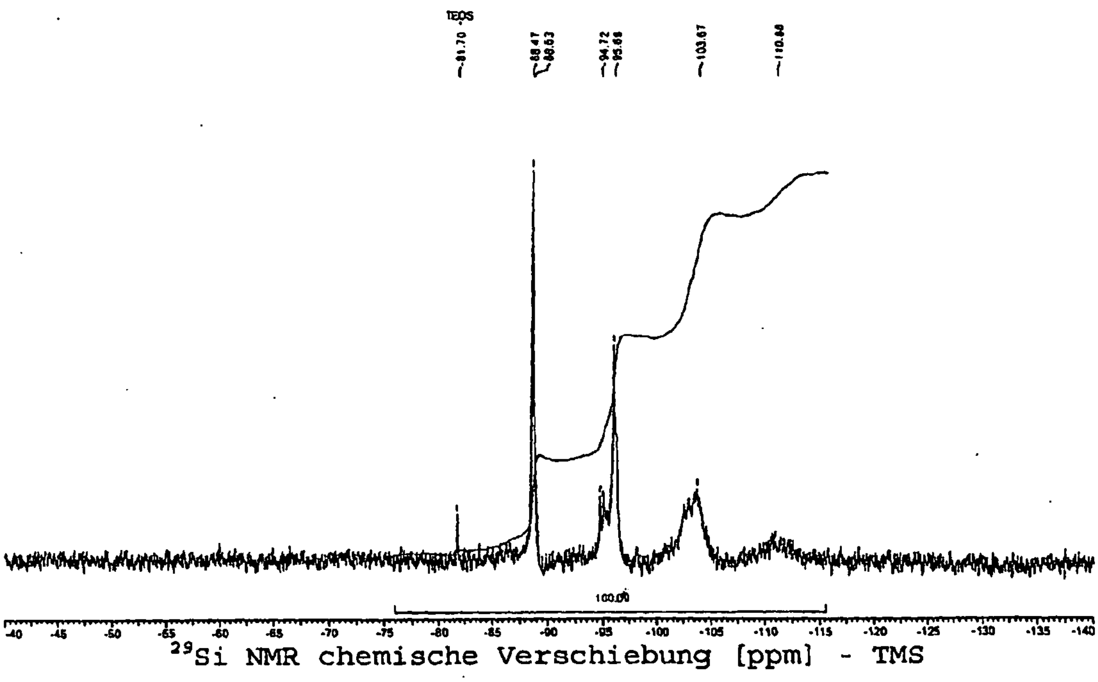
TEOS
-81.70
-94.72
-103.67
100.00
-40 -45 -50 -55 -60 -65 -70 -75 -80 -85 -90 -95 -100 -105 -110 -115 -120 -125 -130 -135 -140
$^{29}$Si NMR chemische Verschiebung [ppm] - TMS

**Figur 3**

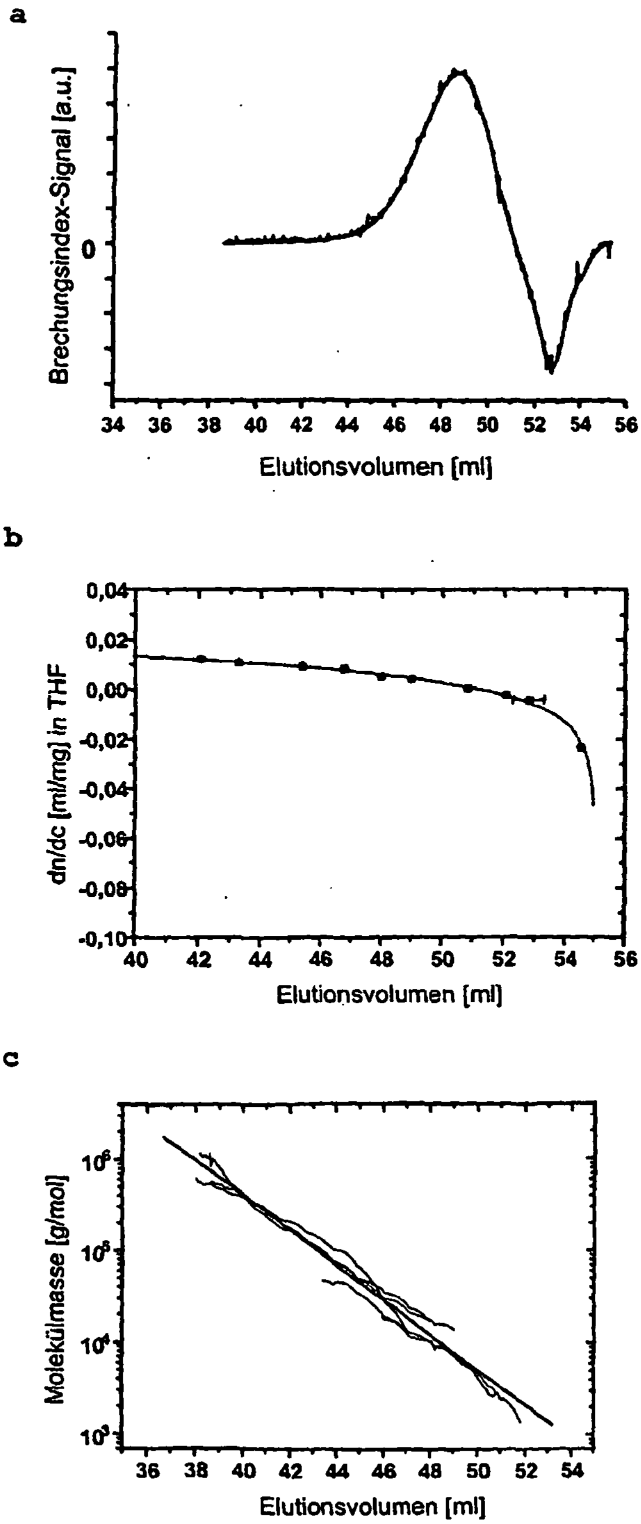
a
Brechungsindex-Signal [a.u.]
0
34 36 38 40 42 44 46 48 50 52 54 56
Elutionsvolumen [ml]
b
dn/dc [ml/mg] in THF
0,04
0,02
0,00
-0,02
-0,04
-0,06
-0,08
-0,10
40 42 44 46 48 50 52 54 56
Elutionsvolumen [ml]
c
Molekülmasse [g/mol]
$10^6$
$10^5$
$10^4$
$10^3$
36 38 40 42 44 46 48 50 52 54
Elutionsvolumen [ml]

Figur 4

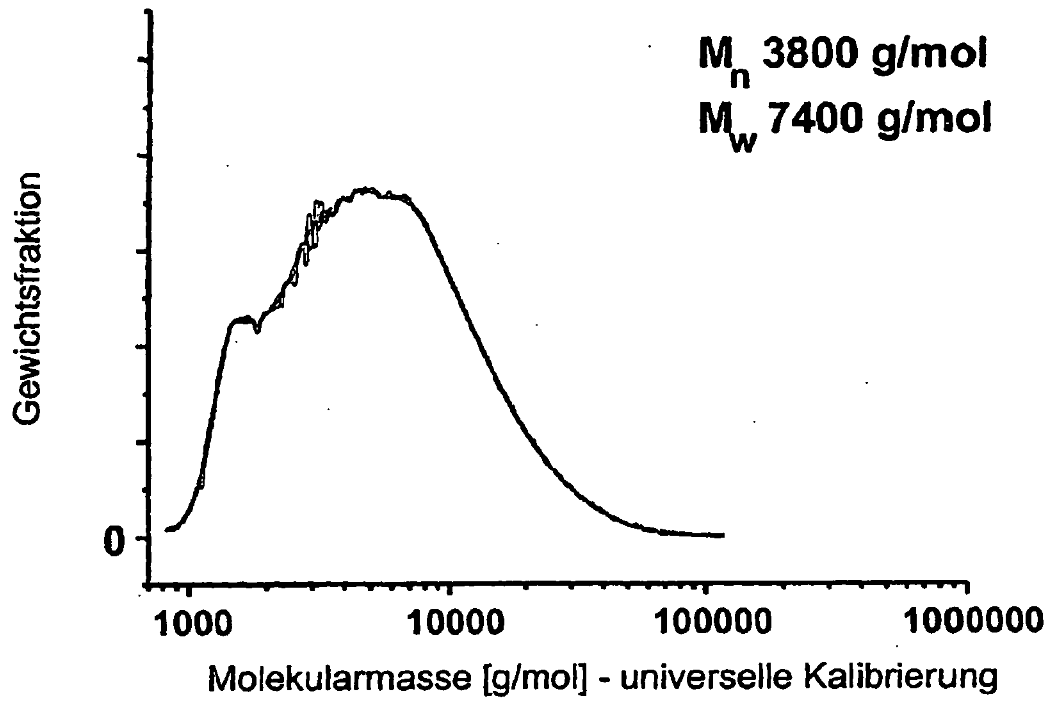
$M_n$ 3800 g/mol
$M_w$ 7400 g/mol
Gewichtsfraktion
0
1000
10000
100000
1000000
Molekularmasse [g/mol] - universelle Kalibrierung

Figur 5

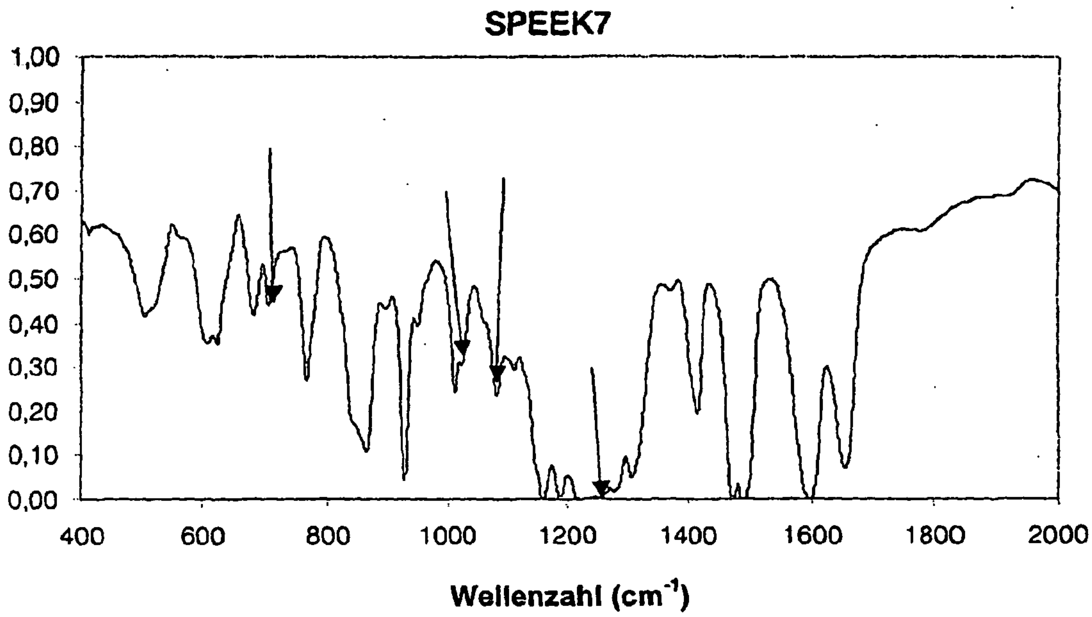
SPEEK7
1,00
0,90
0,80
0,70
0,60
0,50
0,40
0,30
0,20
0,10
0,00
400
600
800
1000
1200
1400
1600
1800
2000
Wellenzahl (cm-1)

Figur 6

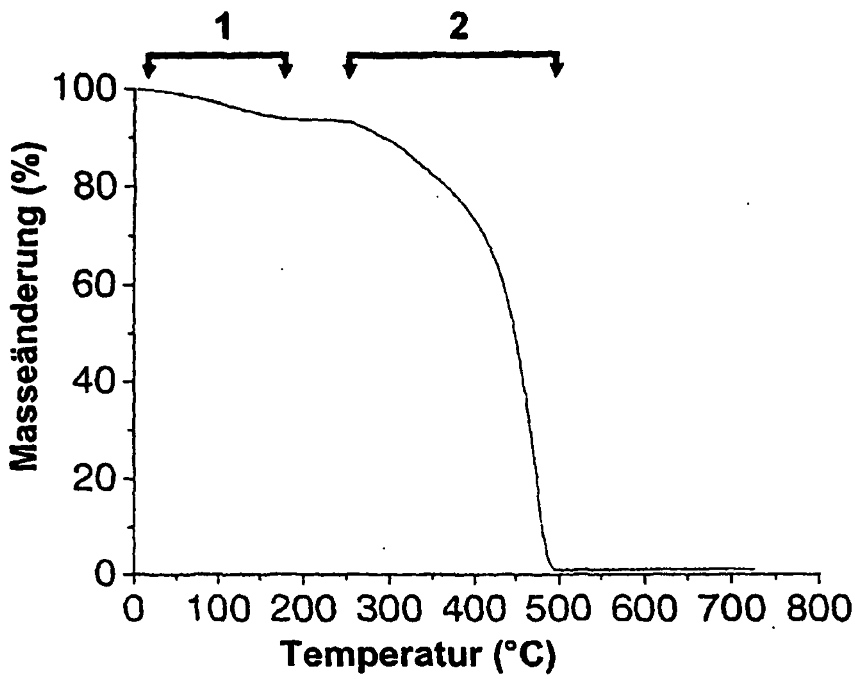
1
2
100
80
60
40
20
0
Masseänderung (%)
0
100
200
300
400
500
600
700
800
Temperatur (°C)

Figur 7

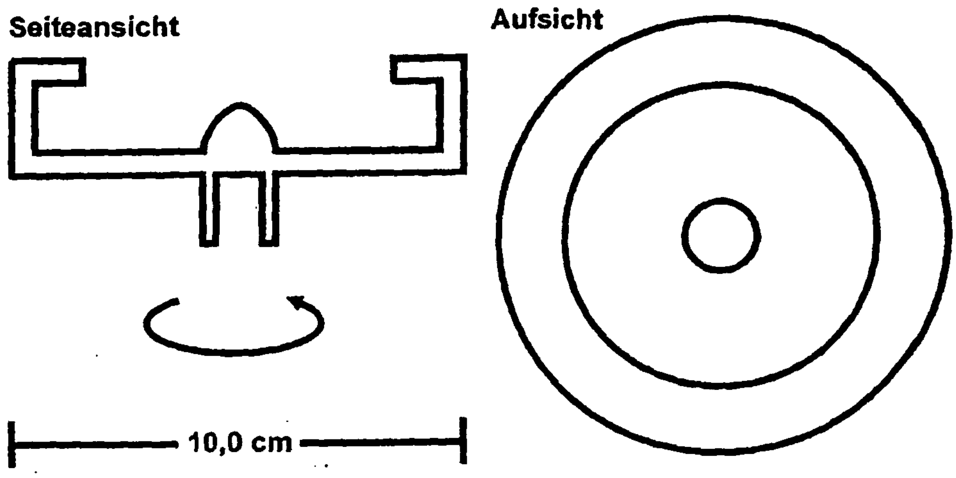


Figur 8

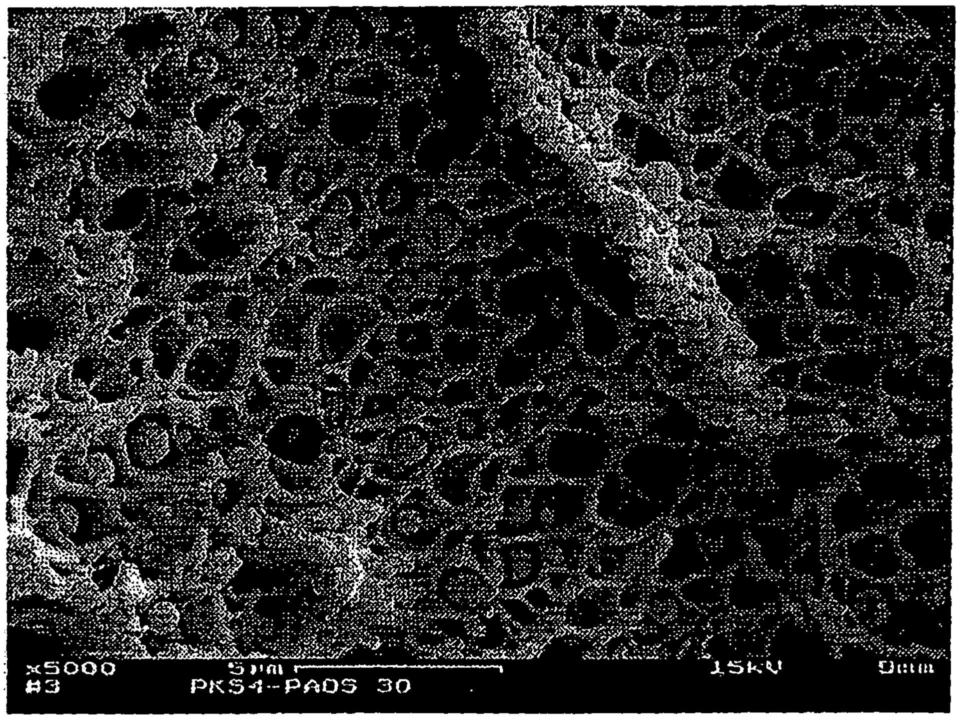


Figur 9

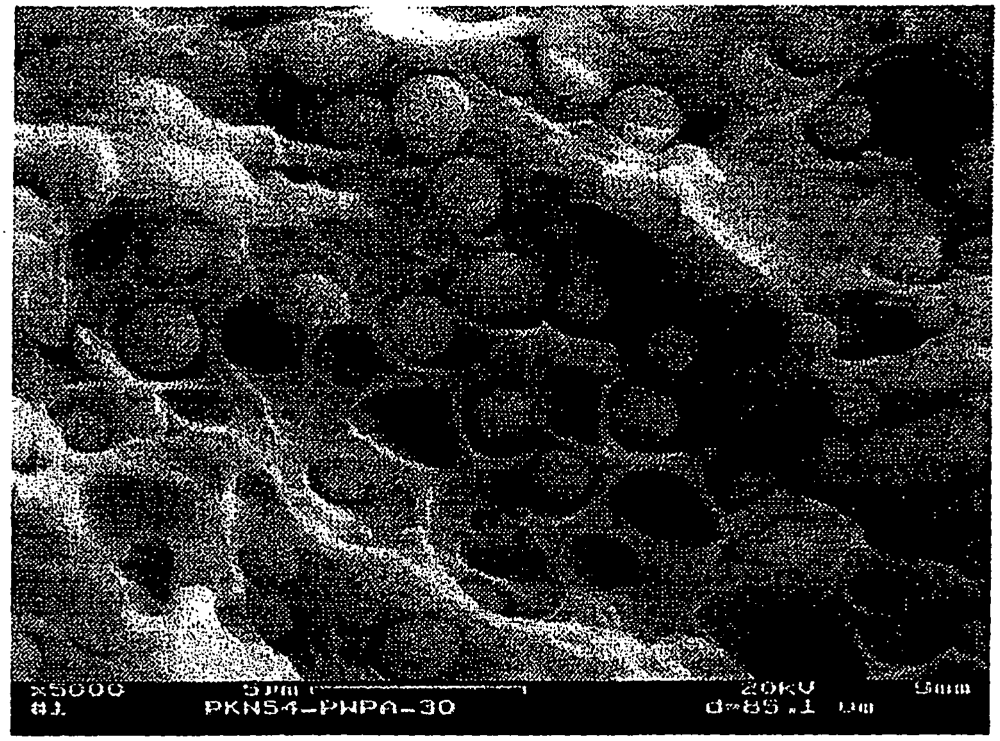


Figur 10

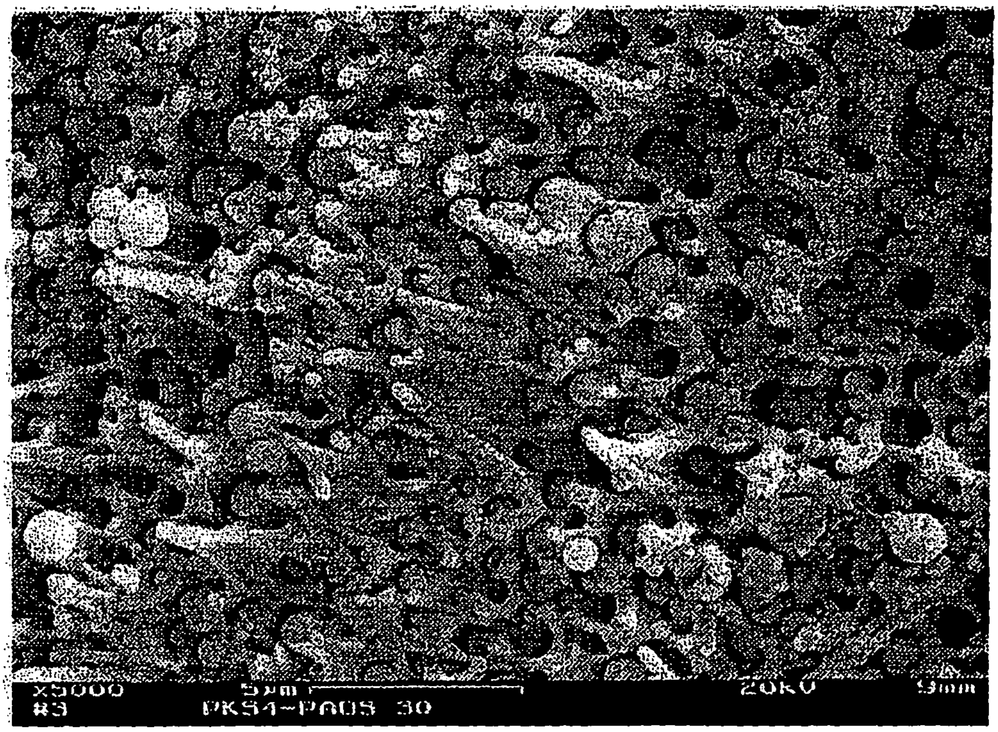


Figur 11

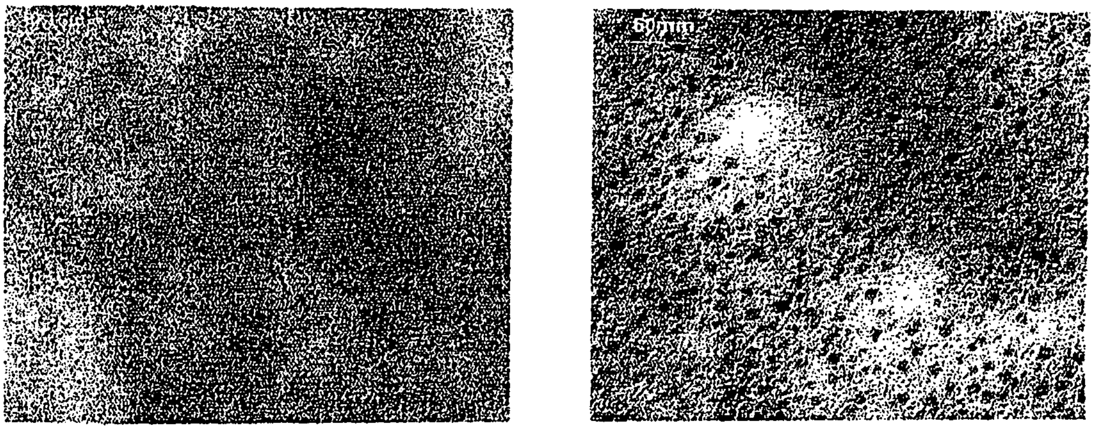

Figur 12

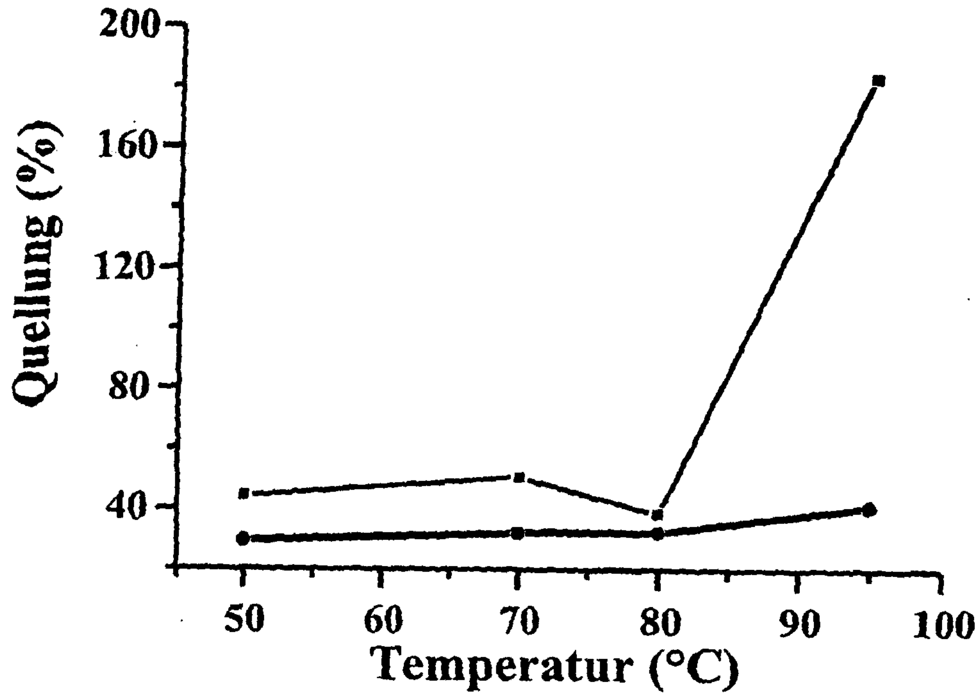


Figur 13

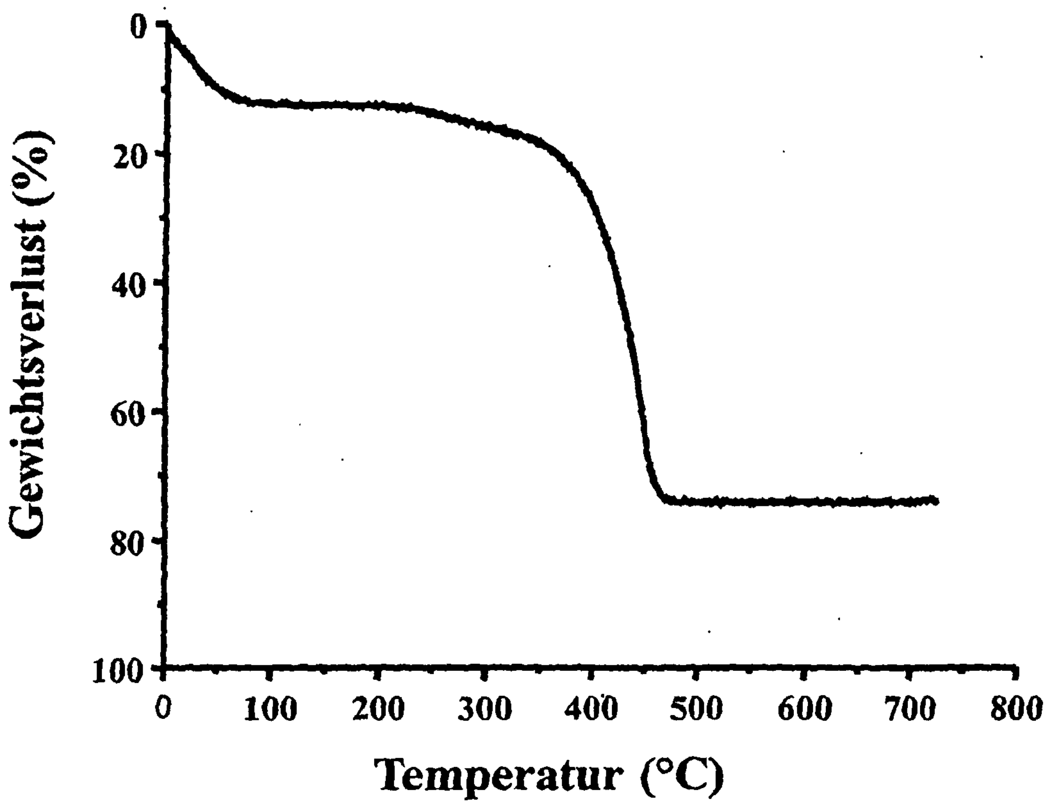
Gewichtsverlust (%)
0
20
40
60
80
100
0
100
200
300
400
500
600
700
800
Temperatur (°C)

Figur 14

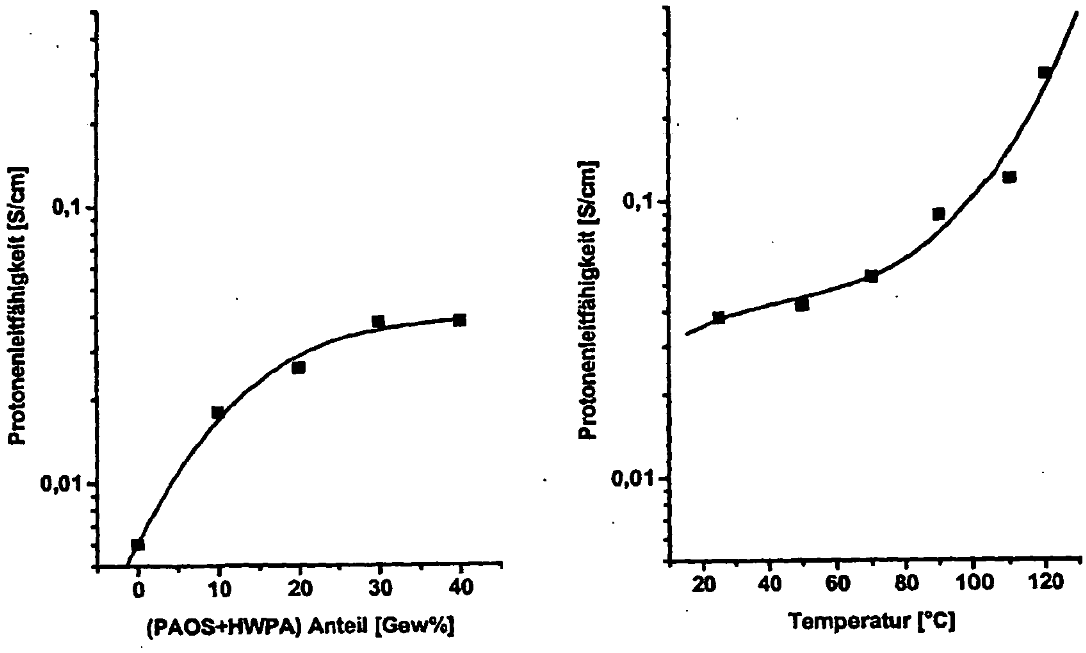
Protonenleitfähigkeit [S/cm]
0,1
0,01
0
10
20
30
40
(PAOS+HWPA) Anteil [Gew%]
Protonenleitfähigkeit [S/cm]
0,1
0,01
20
40
60
80
100
120
Temperatur [°C]

Figur 15

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0574791 A1
- DE 4422158 A1
- DE 19817374 A1